# EUROPEAN PATENT SPECIFICATION

(11) **EP 3 340 173 B1**
(45) Date of publication and mention of the grant of the patent: **02.02.2022**
(21) Application number: 16206316.8
(22) Date of filing: 22.12.2016
(51) Int. Cl.: G06T 7/593, G06T 7/246, G08G 1/16

(54) **VISION SYSTEM AND METHOD FOR A MOTOR VEHICLE**
SICHTSYSTEM UND -VERFAHREN FÜR EIN KRAFTFAHRZEUG
SYSTÈME ET PROCÉDÉ DE VISION POUR VÉHICULE À MOTEUR

(43) Date of publication of application: 27.06.2018
(73) Proprietor: Veoneer Sweden AB, 447 83 Vårgårda (SE)
(72) Inventor: Lorentzon, Mattis, 589 39 Linköping (SE); Medley, Fredrik, 582 16 Linköping (SE)
(74) Representative: Müller Verweyen

(56) References cited:
- US-A1- 2012 050 496
- DOMINIK HONEGGER ET AL: "Real-time velocity estimation based on optical flow and disparity matching", INTELLIGENT ROBOTS AND SYSTEMS (IROS), 2012 IEEE/RSJ INTERNATIONAL CONFERENCE ON, IEEE, 7 October 2012 (2012-10-07), pages 5177-5182, XP032287376, DOI: 10.1109/IROS.2012.6385530 ISBN: 978-1-4673-1737-5
- Naveen Appiah ET AL: "Obstacle detection using stereo vision for self-driving cars", , 11 May 2016 (2016-05-11), pages 1-7, XP055360540, Retrieved from the Internet: URL:https://web.stanford.edu/class/ee368/P roject_Autumn_1516/Reports/Appiah_Bandaru. pdf [retrieved on 2017-03-30]

## Description

The invention relates to a vision system for a motor vehicle, comprising a stereo image apparatus adapted to capture images from a surrounding of the motor vehicle, a disparity calculation block adapted to calculate a stereo disparity of left/right images captured by said stereo imaging apparatus, and a processing device adapted to perform image processing of images captured by said imaging apparatus. The invention furthermore relates to a corresponding vision method.

Vision systems for motor vehicles are generally known, see for example EP 2 219 133 A1 and US 2010 183192 A1.

For a wide range of image processing procedures it would be beneficial to know the optical flow of the captured images. For example, EP 1 681 577 A2 proposes to determine the optical flow and use it for calculating the vanishing point of a captured image.

G. M. Quénot, "Computation of Optical Flow using Dynamic Programming", IAPR Workshop on Machine Vision Applications, Tokyo, 12-14 November 1996, p. 249-252, discloses a flow calculation method separating the horizontal and vertical motion estimation, by first estimating the horizontal motion, then the vertical, then the horizontal and so on until convergence.

The calculation of the optical flow is highly demanding with respect to processing and hardware resources, especially for the full two-dimensional case. Most approaches estimate the two-dimensional optical flow in one optimization pass, by calculating both horizontal and vertical movement for every pixel in one and the same pass, which gives a squared search space as compared to a one-dimensional calculation. This has so far prohibited its realization in practical vision systems for motor vehicles under cost aspects.

D. Honegger et al., "Real-time Velocity Estimation Based on Optical Flow and Disparity Matching", IEEE Int. Conf. on Intelligent Robots and Systems, 01.10.2012, discloses an FPGAbased platform with the capability of calculating real-time metric optical flow is disclosed.

N. Appiah et al., "Obstacle detection using stereo vision for self-driving cars", 11.05.2016, discloses a sensing system for autonomous systems such as self-driving cars employing two 360° cameras to perceive obstacles all around an autonomous vehicle using stereo vision.

The object of the present invention is to provide a cost-effective, practical vision system and method for a motor vehicle suited for calculating an optical flow of captured images.

The invention solves this object with the features of the independent claims. The calculation of the one-dimensional optical flow in the vertical direction is useful for several applications in automotive vision. In contrast to the Optical Flow using Dynamic Programming, the calculation of the vertical optical flow can be performed with only minor additional hardware cost, by performing time sharing of the disparity calculation block between the stereo disparity calculation and the vertical optical flow calculation. In other words, the vertical optical flow calculation uses the algorithm of the stereo disparity calculation in the disparity calculation block. Therefore, the stereo code is advantageously used both for the stereo disparity calculation and the vertical optical flow calculation, with only minor adaptations.

An image transposition involving a rotation by 90° is performed prior to performing said vertical optical flow calculation, in order to turn a column search into a row search.

Time sharing is also performed between the stereo disparity calculation and calculation of a one-dimensional optical flow of captured images in a horizontal direction. This advantageously allows to combine the one-dimensional horizontal optical flow and the one-dimensional vertical optical flow to form an approximation to two-dimensional optical flow, which is useful in many automotive applications.

An initial guess of the vertical optical flow is used in the vertical optical flow calculation. A good initial guess of the vertical optical flow is based on ego motion of the vehicle, as for example known from acceleration sensors, a flat road assumption and/or depth information from the stereo image. The initial guess of the vertical optical flow is used to compensate a previous image in the vertical optical flow calculation.

Usual driving environment often contains long vertical edges. A slight miss in vertical shift will still result in correct estimate of the horizontal component of the flow just searching in the horizontal dimension. Some objects in the scene have both vertical structures and horizontal structures, for example pedestrians or vehicles. Many pixels will, due to the vertical structures, have a good estimate of the horizontal flow, but the vertical initial guess may still have a slight deviation. Using the horizontal flow, initial vertical guess, tracking predictions from object detection algorithms and possibly other priors, a new transformed image can be created where the pixels are placed correctly column wise, i.e. a pixel in a column in the previous image will be found in the same column in the current image. By transposing the images, the horizontal flow algorithm can then be reused to find the vertical component of the optical flow. The rough estimate of a predicted tracking box and an average horizontal flow may be enough prior for vertical flow of the whole tracked object, i.e. it may be not necessary using individual priors per pixel.

Preferably a horizontal optical flow estimated with a one-dimensional correlation search engine is used in the vertical optical flow calculation. Here, the estimated horizontal optical flow may preferably be used to compensate a previous image in the vertical optical flow calculation.

The optical flow calculation in one direction can be performed with significantly less processing resources than the conventional optical flow in two dimensions, namely the horizontal and the vertical direction, simultaneously. More specifically, by separately calculating the one-dimensional horizontal optical flow and the one-dimensional vertical optical flow, the search space can advantageously be reduced to 2·√s, where s is the search space for calculating the full 2-dimensional optical flow in one optimization pass. Therefore, through the invention a cost-effective practical vision system for a motor vehicle supplying an optical flow of captured images in a good approximation can be realized.

As described above, the vertical optical flow calculation and the horizontal optical flow calculation are performed by a correlation search on each line of consecutive images. In many mounting situations the horizontal direction can be approximated by the baseline direction, and the horizontal optical flow can be approximated by the optical flow in the baseline direction, while the vertical optical flow can be approximated by the optical flow perpendicular to the baseline direction.

The stereo disparity calculation and the one-dimensional optical flow calculations are advantageously performed in one and the same dedicated hardware device, for example a Field Programmable Gate Array FPGA, adapted to perform both the stereo disparity calculation and the optical flow calculation. As a result, significant savings regarding computing and hardware resources are possible.

Several preferred features contribute to improving the quality of the optical flow calculation. In particular, the system preferably is adapted to perform a pitch correction by estimating a vertical displacement of captured images caused by pitch change of the vehicle, and in particular to shift an image vertically before the optical flow calculation in order to compensate for changing pitch of the vehicle. The estimation of the vertical displacement of captured images caused by pitch can be done using standard methods based on image processing, or signals from vehicle dynamics sensors like accelerometers. The compensation is particularly applied in the optical flow calculation, because the pitch can change strongly from one frame to another when for example driving over speed bumps and the like.

Preferably the system is adapted to perform a compensation processing to a captured image in order to compensate for the movement of the vehicle along the road which leads to a vertical shift of the image from one frame to the next, which is particularly strong in the lower part of the image. A simple but effective method of realizing such compensation processing is based on removing or duplicating lines in the image. Other compensation methods are possible, for example affine transformation, i.e. scaling, rotation, translation or any other suited method. The vehicle movement compensation is preferably using the vehicle speed as measured for example by a vehicle speed sensor or calculated from image processing of images acquired by the imaging apparatus.

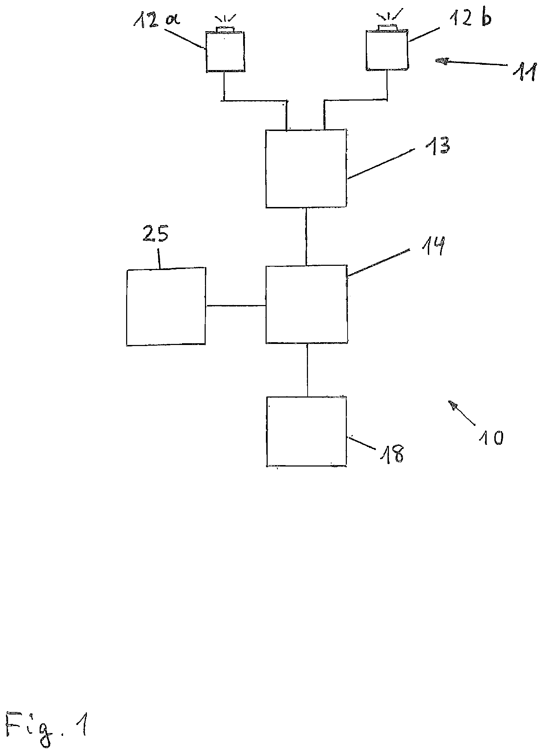

In the following the invention shall be illustrated on the basis of preferred embodiments with reference to the accompanying drawings, wherein
- Fig. 1: shows a schematic view of a vision system for a motor vehicle;
- Fig. 2: shows a detailed schematic view of part of the vision system of Fig. 1 in one embodiment;
- Fig. 3: shows a table illustrating the memory usage and calculation switching for an imaging apparatus using different exposure levels.
- Fig. 4: shows a general scheme illustrating the stereo disparity calculation;
- Fig. 5: shows a general scheme illustrating the horizontal optical flow calculation; and
- Fig. 6: shows a general scheme illustrating the vertical optical flow calculation.

The vision system 10 is mounted in a motor vehicle and comprises an imaging apparatus 11 for capturing images of a region surrounding the motor vehicle, for example a region in front of the motor vehicle. The imaging apparatus 11 comprises a plurality of optical imaging devices 12a, 12b forming a stereo imaging apparatus 11. Preferably the imaging devices 12 are cameras, operating in the visible and/or infrared wavelength range, where infrared covers near IR with wavelengths below 5 microns and/or far IR with wavelengths beyond 5 microns.

The imaging apparatus 11 is coupled to an image pre-processor 13 adapted to control the capture of images by the imaging apparatus 11, receive the electrical signal containing the image information from the imaging apparatus 11, rectify or warp pairs of left/ right images into alignment and/or create disparity or depth images, which per se is known in the art. The pre-processor 13 in particular comprises, or forms, the disparity calculation block 17 adapted to calculate the stereo disparity of left/right images captured by the imaging apparatus 11. The image pre-processor 13 may be realized by a dedicated hardware circuit, for example a Field Programmable Gate Array (FPGA) or an Application Specific Integrated Circuit (ASIC). Alternatively the pre-processor 13, or part of its functions, can be realized in the electronic processing device 14 or a System-On-Chip (SoC) device comprising, for example, FPGA, processing device, ARM and/or microprocessor functionality.

The pre-processed image data is then provided to an electronic processing device 14 where further image and data processing is carried out by corresponding software. The image and data processing in the processing device 14 may for example comprise identifying and preferably also classifying possible objects in front of the motor vehicle, such as pedestrians, other vehicles, bicyclists and/or large animals, tracking over time the position of object candidates identified in the captured images, and activating or controlling at least one driver assistance device 18 depending on an estimation performed with respect to a tracked object, for example an estimated collision probability. The driver assistance device 18 may in particular comprise a display device to display information relating to a detected object. However, the invention is not limited to a display device. The driver assistance device 18 may in addition or alternatively comprise a warning device adapted to provide a collision warning to the driver by suitable optical, acoustical and/or haptic warning signals; one or more restraint systems such as occupant airbags or safety belt tensioners, pedestrian airbags, hood lifters and the like; and/or dynamic vehicle control systems such as brake or steering control devices.

The data processing device 14 is preferably a digital device which is programmed or programmable and preferably comprises a microprocessor, micro-controller, digital signal processor (processing device) or a System-On-Chip (SoC) device, and preferably has access to, or comprises, a memory device 25. The data processing device 14, pre-processing device 13 and the memory device 25 are preferably realised in an on-board electronic control unit (ECU) and may be connected to the imaging apparatus 11 via a separate cable or a vehicle data bus. In another embodiment the ECU and one or more of the imaging devices 12 can be integrated into a single unit, where a one box solution including the ECU and all imaging devices 12 can be preferred. All steps from imaging, image pre-processing, image processing to possible activation or control of driver assistance device 18 are performed automatically and continuously during driving in real time.

The pre-processing device 13, which here is a dedicated hardware device, for example an FPGA, comprises a warping and alignment section 15, pre-calculation sections 16a, 16b for performing suited pre-calculations such as filtering, and a stereo disparity calculation section or block 17 for executing the stereo disparity code. Suitable post-calculations are executed on the output of the stereo disparity calculation block 17 in order to obtain a disparity map.

The memory device 25 comprises data areas 26 and 27 for storing at least the image data of the (N-1)th or last-before-current time frame and the image data of the N-th or current time frame. This is different from prior art vision systems where only the image data of the respective current time frame is stored in memory, but the image data of the last-before-current time frame is not kept in the system. The images stored in the memory device 25 need not be un-processed raw image data, but preferably are processed images which in particular may have a reduced size as compared to the raw image data. The images stored in the memory device 25 may for example be warped images output by the warping and alignment section 15, pre-processed images output by the pre-calculation sections 16a, 16b, or images otherwise suitably modified and/or scaled. This allows to perform the optical flow calculation, to be explained later, on down-sampled images of reduced size which contributes to saving significant processing resources.

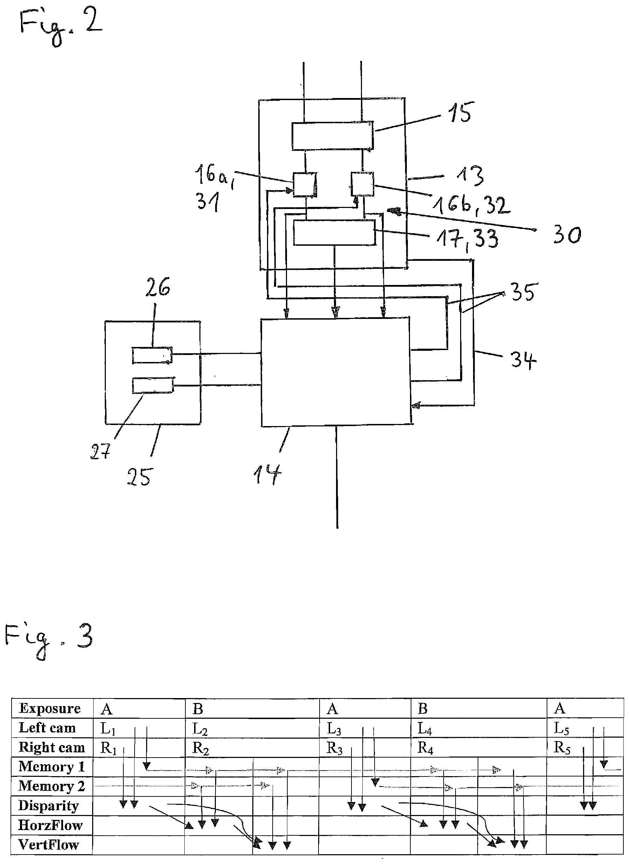

In the embodiment according to Fig. 2 the horizontal optical flow calculation and the vertical optical flow calculation are realized in one and the same dedicated hardware device as the stereo disparity calculation, namely in the pre-processing device 13. The vision system 10 in this embodiment comprises a one-dimensional optical flow calculator 30 formed in the pre-processor 13. The optical flow calculator 30 preferably controls the processing device 14, in particular video ports thereof, via one or more control lines 34, to continuously read the image data of the (N-1)-th and N-th frames out from the memory device 25 and input them into the optical flow calculator 30 via data lines 35. That is, when the horizontal optical flow or the vertical optical flow is to be calculated in the pre-processing device 13, the image data of the (N-1)-th and N-th frames are streamed back into the pre-processing device 13 through the data lines 35 as controlled by the pre-processing device 13 through the control line 34.

As mentioned above, preferably, down-sampled images of reduced size are streamed back into the optical flow calculator 30 for optical flow calculation which contributes to saving significant processing resources.

The optical flow calculator 30 comprises pre-calculation sections 31, 32 for performing suitable pre-calculations on the image data of the (N-1)-th and N-th frames, respectively. This may comprise for example, as mentioned above, the horizontal shifting of one of the images; pitch correction; and/or compensation for movement of the vehicle in particular in the lower part of the image. The pre-calculation sections 31, 32 are preferably formed by the pre-calculation sections 16a, 16b in the pre-processor 13.

The horizontal optical flow calculator 30 furthermore comprises a one-dimensional optical flow calculating section 33, which is formed by the stereo disparity calculation block 17. The one-dimensional optical flow calculating section 33 comprises a code adapted to calculate the optical flow in the horizontal direction of the captured images and, after a suitable image transposition, also the optical flow in the vertical direction. The algorithm of the optical flow calculating section 33 is essentially the same as the algorithm used in the disparity calculation block 17, with a few advantageous adaptations as discussed above. The optical flow calculation is performed on down-sampled images of reduced size as compared to the raw image data, which contributes to saving significant processing resources. The output of the one-dimensional optical flow calculator 30 undergoes some suited post-calculations in order to obtain the final horizontal optical flow or the final vertical optical flow, respectively.

In the case of calculating the horizontal optical flow, these post-calculations may comprise for example the horizontal shift-back due to the image having been horizontally shifted in one of the pre-calculation sections 31, 32. This is because the stereo disparity calculation can handle only positive horizontal motion but the horizontal shift will allow negative motion, as required for the horizontal optical flow calculation. The shift-back operation may for example be performed by a subtraction of a constant from the disparity value that corresponds to the shift in the pre-calculation. Instead of shifting one of the images horizontally, the search range in the disparity calculation can be shifted before the optical flow calculation. For example, the disparity search engine could search e.g. 0 to 31 pixel disparity when calculating stereo, and search e.g. -16 to +15 pixel when calculating horizontal optical flow.

Although it may be preferred for the one-dimensional optical flow calculator 30 to use the memory device 25 associated to the processing device 14 for storing the image data of the (N-1)-th and N-th frames, this is not strictly mandatory. In another embodiment not shown in the Figures, a separate memory for storing the image data of the (N-1)-th and N-th frames may be associated directly to the one-dimensional optical flow calculator 30, which may allow a quicker fetching of the image data from the memory.

In another preferred embodiment not shown in the Figures, the pre-calculation sections 31, 32 may be realized in the processing device 14. The processing device 14 creates images where the above mentioned compensations have been performed, and then streams these data to the optical flow calculator 30 when the optical flow calculations are scheduled to take place. In this case, pre-processed images are streamed to the optical flow calculator 30 in at least one channel, preferably both channels.

The embodiment according to Figure 2 is particularly advantageous in, but not restricted to, cases where different exposure levels are used in the imaging apparatus 11. For example, every second frame may use a normal exposure (exposure level A in Fig. 3) that produces images which can be used for the stereo disparity calculation. The other exposure (exposure level B in Fig. 3), for example adapted to low-light conditions at night, cannot be used for the stereo disparity calculation and therefore the hardware device 13 would be idling during these periods. However, these periods may be used advantageously for the horizontal and vertical optical flow calculation. Therefore, by periodically switching between stereo disparity calculation and one-dimensional optical flow calculation the capacity of the hardware device 13 is fully utilized and no additional dedicated hardware device is required.

This method is explained in more detail with reference to Fig. 3. For the images in frame No. 1 the stereo disparity calculation is performed and the image of a specific imaging device, here left camera 12a, is stored for example in memory area 26 (see Fig. 2). For the images in frame No. 2 the stereo disparity calculation cannot performed, so there is time for calculating a one-dimensional optical flow, for example the horizontal optical flow, for the current exposure level A frame fetched from memory area 26 and the last-before-current exposure level A frame (two frames before frame no. 1) fetched from the memory area 27. For the images in frame No. 3 the stereo disparity calculation is performed and the image of the left camera 12a is stored in memory area 27, thereby overwriting the old data in memory area 27 which are no longer needed. For the images in frame No. 4 the stereo disparity calculation cannot performed, so there is time for calculating the other one-dimensional optical flow, here the vertical optical flow, for the current level A frame no. 3 fetched from memory area 27 and the last-before-current level A frame no. 1 fetched from memory area 26. And so on.

From Fig. 3 it is apparent that the terms "N-th frame" and "(N-1)th" frame are not restricted to ultimately subsequent frames and ultimately current and ultimately last-before-current frames, but subsequent, current and last-before-current frames of same exposure level or, more generally, subsequent, current and last-before-current frames used for horizontal optical flow calculation.

According to another embodiment, the time between the two frames may be longer when the vehicle drives slower.

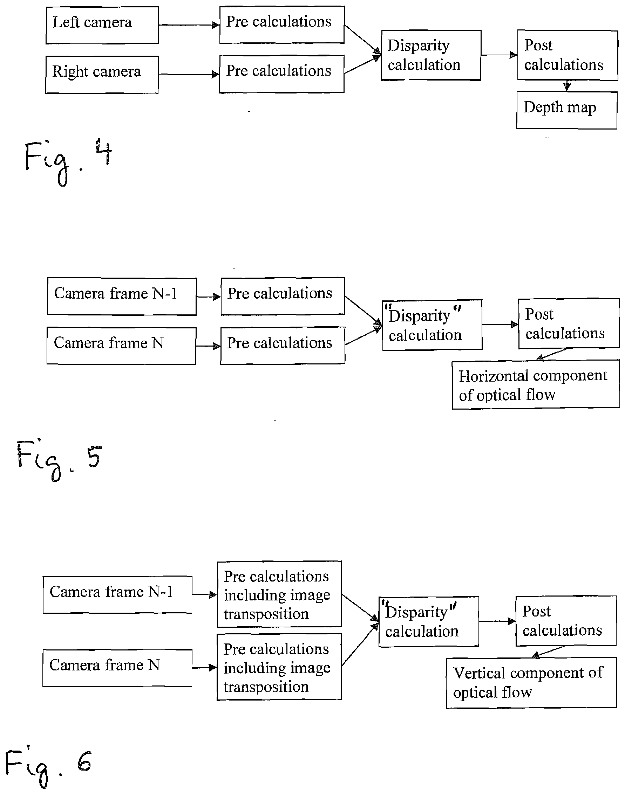

In Figures 4 to 6 the general schemes of stereo disparity calculation (Figure 4), the horizontal optical flow calculation (Figure 5) and the vertical optical flow calculation (Figure 6) is shown without reference to a specific hardware implementation. In Figures 5 and 6, the "Disparity" calculation has been set in apostrophes indicating that essentially the disparity calculation algorithm of Figure 4 may be used for the horizontal optical flow calculation and the vertical optical flow calculation.

The calculation of the one-dimensional vertical optical flow is described in the following in more detail with reference to Figure 6. Step-by-step, the process is:
1. Initial vertical flow guess based on ego motion, flat road assumption and/or depth information from the stereo image.
2. Compensate previous image with the vertical flow guess.
3. Estimate horizontal flow with a one dimensional search along all image rows.
4. Transpose images, in order to turn a column search into a row search.
5. Compensate previous image with the resulting horizontal flow.
6. Estimate vertical flow with a one dimensional search along all transposed image rows.

As described above, the horizontal motion and the vertical motion can both be estimated using a correlation search in the horizontal image direction. This is exactly what is done in the disparity calculation in the stereo algorithm. Therefore, the stereo disparity block 17 in the FPGA 13 can be used both for the stereo, the horizontal optical flow and vertical optical flow calculations.

## Claims

1. A vision system (10) for a motor vehicle, comprising a stereo imaging apparatus (11) adapted to capture images from a surrounding of the motor vehicle, a disparity calculation block (17) adapted to calculate a stereo disparity of left/right images captured by said stereo imaging apparatus (11), a memory means (25), and a processing device (14) adapted to perform image processing of images captured by said imaging apparatus (11), wherein said vision system is adapted to perform time sharing of said disparity calculation block (17) by periodically switching between said stereo disparity calculation and calculation of one-dimensional optical flow in a vertical direction of captured images, wherein images of the current time frame and the last before current time frame, or of current and last-before-current frames of same exposure level, of an imaging device (12) selected among the plurality of optical imaging devices (12a, 12b) forming the stereo imaging apparatus (11), are stored in said memory means (25) for said vertical optical flow calculation, wherein said vision system (10) is adapted to perform an image transposition involving a rotation by 90°, in order to turn a column search into a row search, prior to performing said vertical optical flow calculation with a one-dimensional search along all transposed image rows, wherein said vision system (10) is adapted to perform stereo disparity calculation in said disparity calculation block (17), forward image data from said disparity calculation block (17) to said processing device (14), and stream back image data from said processing device (14) to the disparity calculation block (17) for the optical flow calculation, wherein said disparity calculation block (17) is realized in a dedicated hardware device (13), wherein an initial guess of the vertical optical flow is used in the vertical optical flow calculation, wherein said initial guess of the vertical optical flow is based on ego motion of the vehicle, a flat road assumption and/or depth information from the stereo image processing, wherein said initial guess of the vertical optical flow is used to compensate a previous image in the vertical optical flow calculation.

2. The vision system as claimed claim 1, **characterized in that** said disparity calculation block (17) is adapted to calculate one-dimensional optical flow in a horizontal direction of captured images.

3. The vision system as claimed in claim 2, **characterized in that** the one-dimensional horizontal optical flow and the one-dimensional vertical optical flow are combined to form an approximation to two-dimensional optical flow.

4. The vision system as claimed in any one of the preceding claims, **characterized in that** a horizontal optical flow estimated with a one-dimensional correlation search engine in said disparity calculation block (17) is used in the vertical optical flow calculation.

5. The vision system as claimed in claim 4, **characterized in that** the estimated horizontal optical flow is used to compensate a previous image in the vertical optical flow calculation.

6. The vision system as claimed in any one of claims 2 to 5, wherein images of at least the current time frame and the last before current time frame are stored in said memory means (25) for said horizontal optical flow calculation.

7. The vision system as claimed in claim 6, wherein the images stored in said memory means (25) for said horizontal optical flow calculation and/or said vertical optical flow calculation are pre-processed images of reduced size as compared to the raw images taken by the imaging apparatus (11).

8. The vision system as claimed in any one of the preceding claims, wherein said vision system (10) is adapted to estimate a vertical displacement of captured images, and to shift an image vertically before the horizontal optical flow calculation in order to compensate for changing pitch of the vehicle, and/or to perform a compensation processing to captured images in order to compensate for movement of the vehicle.

9. The vision system as claimed in any one of the preceding claims, wherein said dedicated hardware device is a Field Programmable Gate Array FPGA, an Application Specific Integrated Circuit ASIC or part of a System-on-Chip SoC device.

10. A vision method for a motor vehicle, comprising capturing images from a surrounding of the motor vehicle, calculating in a disparity calculation block (17) a stereo disparity left/right images captured by said stereo imaging apparatus (11), and performing image processing of the captured images by an image processing device (14), performing time sharing of said disparity calculation block (17) by periodically switching between said stereo disparity calculation and optical flow calculation of one-dimensional optical flow in a vertical direction of captured images, and storing images of the current time frame and the last before current time frame, or of current and last-before-current frames of same exposure level, of an imaging device (12) selected among the plurality of optical imaging devices (12a, 12b) forming the stereo imaging apparatus (11), for said optical flow calculation, performing an image transposition involving a rotation by 90°, in order to turn a column search into a row search, prior to performing said vertical optical flow calculation with a one-dimensional search along all transposed image rows, wherein said vision method comprises performing stereo disparity calculation in said disparity calculation block (17), forwarding image data from said disparity calculation block (17) to said processing device (14), and streaming back image data from said processing device (14) to the disparity calculation block (17) for the optical flow calculation, wherein said disparity calculation block (17) is realized in a dedicated hardware device (13), wherein an initial guess of the vertical optical flow is used in the vertical optical flow calculation, wherein said initial guess of the vertical optical flow is based on ego motion of the vehicle, a flat road assumption and/or depth information from the stereo image processing, wherein said initial guess of the vertical optical flow is used to compensate a previous image in the vertical optical flow calculation.

## Patentansprüche

1. Ein Sichtsystem (10) für ein Kraftfahrzeug, mit einer Stereo-Bildaufnahmevorrichtung (11), die dazu eingerichtet ist, Bilder aus der Umgebung des Kraftfahrzeugs zu erfassen, einem Disparitätsberechnungsblock (17), der dazu eingerichtet ist, eine Stereodisparität von durch die Stereo-Bildaufnahmevorrichtung (11) erfassten Links/Rechts-Bildern zu berechnen, einer Speichereinrichtung (25) und einer Verarbeitungseinrichtung (14), die dazu eingerichtet ist, eine Bildverarbeitung von durch die Bildaufnahmevorrichtung (11) erfassten Bildern durchzuführen, wobei das Sichtsystem dazu eingerichtet ist, eine zeitliche Aufteilung des Disparitätsberechnungsblocks (17) durch periodisches Umschalten zwischen der Stereodisparitätsberechnung und der Berechnung eines eindimensionalen optischen Flusses in einer vertikalen Richtung von erfassten Bildern durchzuführen, wobei Bilder des aktuellen Zeitrahmens und des letzten vor dem aktuellen Zeitrahmen oder von aktuellen und letzten vor dem aktuellen Rahmen desselben Belichtungsniveaus einer Bildaufnahmevorrichtung (12), die aus der Vielzahl von optischen Bildaufnahmevorrichtungen (12a, 12b) ausgewählt ist, die die Stereo-Bildaufnahmevorrichtung (11) bilden, in der Speichereinrichtung (25) für die vertikale optische Flussberechnung gespeichert werden, wobei das Sichtsystem (10) dazu eingerichtet ist, eine Bildtransposition durchzuführen, die eine Drehung um 90° beinhaltet, um eine Spaltensuche in eine Zeilensuche umzuwandeln, bevor die vertikale optische Flussberechnung mit einer eindimensionalen Suche entlang aller transponierten Bildzeilen durchgeführt wird, wobei das Sichtsystem (10) dazu eingerichtet ist, eine Stereodisparitätsberechnung in dem Disparitätsberechnungsblock (17) durchzuführen, Bilddaten von dem Disparitätsberechnungsblock (17) zu der Bildaufnahmevorrichtung (14) weiterzuleiten und Bilddaten von der Bildaufnahmevorrichtung (14) zu dem Disparitätsberechnungsblock (17) für die optische Flussberechnung zurückzuleiten, wobei der Disparitätsberechnungsblock (17) in einer dedizierten Hardwarevorrichtung (13) realisiert ist, wobei eine anfängliche Schätzung des vertikalen optischen Flusses in der vertikalen optischen Flussberechnung verwendet wird, wobei die anfängliche Schätzung des vertikalen optischen Flusses auf einer Ego-Bewegung des Fahrzeugs, einer Annahme einer ebenen Straße und/oder Tiefeninformationen aus der Stereobildverarbeitung basiert, wobei die anfängliche Schätzung des vertikalen optischen Flusses verwendet wird, um ein vorheriges Bild in der vertikalen optischen Flussberechnung zu kompensieren.

2. Das Sichtsystem nach Anspruch 1, **dadurch gekennzeichnet, dass** der Disparitätsberechnungsblock (17) dazu eingerichtet ist, einen eindimensionalen optischen Fluss in einer horizontalen Richtung von aufgenommenen Bildern zu berechnen.

3. Das Sichtsystem nach Anspruch 2, **dadurch gekennzeichnet, dass** der eindimensionale horizontale optische Fluss und der eindimensionale vertikale optische Fluss kombiniert werden, um eine Annäherung an den zweidimensionalen optischen Fluss zu bilden.

4. Das Sichtsystem nach einem der vorangehenden Ansprüche, **dadurch gekennzeichnet, dass** ein horizontaler optischer Fluss, der mit einer eindimensionalen Korrelationssuchmaschine in dem Disparitätsberechnungsblock (17) geschätzt wird, in der vertikalen optischen Flussberechnung verwendet wird.

5. Das Sichtsystem nach Anspruch 4, **dadurch gekennzeichnet, dass** der geschätzte horizontale optische Fluss verwendet wird, um ein vorheriges Bild in der vertikalen optischen Flussberechnung zu kompensieren.

6. Das Sichtsystem nach einem der Ansprüche 2 bis 5, wobei Bilder zumindest des aktuellen Zeitrahmens und des letzten vor dem aktuellen Zeitrahmen in der Speichereinrichtung (25) für die horizontale optische Flußberechnung gespeichert sind.

7. Das Sichtsystem nach Anspruch 6, wobei die in dem Speichermittel (25) für die horizontale optische Flussberechnung und/oder die vertikale optische Flussberechnung gespeicherten Bilder vorverarbeitete Bilder mit reduzierter Größe im Vergleich zu den von der Bildaufnahmevorrichtung (11) aufgenommenen Rohbildern sind.

8. Das Sichtsystem nach einem der vorangehenden Ansprüche, wobei das Sichtsystem (10) dazu eingerichtet ist, eine vertikale Verschiebung der aufgenommenen Bilder abzuschätzen und ein Bild vor der horizontalen optischen Flussberechnung vertikal zu verschieben, um eine sich ändernde Neigung des Fahrzeugs zu kompensieren, und/oder eine Kompensationsverarbeitung an den aufgenommenen Bildern durchzuführen, um eine Bewegung des Fahrzeugs zu kompensieren.

9. Das Sichtsystem nach einem der vorangehenden Ansprüche, wobei die dedizierte Hardwarevorrichtung ein Field Programmable Gate Array FPGA, eine anwendungsspezifische integrierte Schaltung ASIC oder ein Teil einer System-on-Chip SoC-Vorrichtung ist.

10. Ein Sichtverfahren für ein Kraftfahrzeug, das das Erfassen von Bildern aus einer Umgebung des Kraftfahrzeugs, das Berechnen einer Stereo-Disparität von links/rechts-Bildern, die von der Stereo-Bildaufnahmevorrichtung (11) erfasst wurden, in einem Disparitätsberechnungsblock (17) und das Durchführen einer Bildverarbeitung der erfassten Bilder durch eine Bildverarbeitungsvorrichtung (14) umfasst, das Durchführen einer zeitlichen Aufteilung des Disparitätsberechnungsblocks (17) durch periodisches Umschalten zwischen der Stereo-Disparitätsberechnung und der optischen Flussberechnung eines eindimensionalen optischen Flusses in einer vertikalen Richtung der erfassten Bilder, und Speichern von Bildern des aktuellen Zeitrahmens und des letzten vor dem aktuellen Zeitrahmen oder von aktuellen und letzten vor dem aktuellen Rahmen desselben Belichtungsniveaus einer Bildaufnahmevorrichtung (12), die aus der Vielzahl von optischen Bildaufnahmevorrichtungen (12a, 12b) ausgewählt ist, die die Stereo-Bildaufnahmevorrichtung (11) bilden, für die optische Flussberechnung, Durchführen einer Bildtransposition, die eine Drehung um 90° beinhaltet, um eine Spaltensuche in eine Zeilensuche zu verwandeln, vor der Durchführung der vertikalen optischen Flussberechnung mit einer eindimensionalen Suche entlang aller transponierten Bildzeilen, wobei das Sichtverfahren die Durchführung einer Stereodisparitätsberechnung in dem Disparitätsberechnungsblock (17), die Weiterleitung von Bilddaten von dem Disparitätsberechnungsblock (17) an die Verarbeitungsvorrichtung (14) und das Zurückströmen von Bilddaten von der Verarbeitungsvorrichtung (14) zu dem Disparitätsberechnungsblock (17) für die optische Flussberechnung umfasst, wobei der Disparitätsberechnungsblock (17) in einer dedizierten Hardwarevorrichtung (13) realisiert ist, wobei eine anfängliche Schätzung des vertikalen optischen Flusses in der vertikalen optischen Flussberechnung verwendet wird, wobei die anfängliche Schätzung des vertikalen optischen Flusses auf einer Ego-Bewegung des Fahrzeugs, einer Annahme einer ebenen Straße und/oder Tiefeninformationen von der Stereobildverarbeitung basiert, wobei die anfängliche Schätzung des vertikalen optischen Flusses verwendet wird, um ein vorheriges Bild in der vertikalen optischen Flussberechnung zu kompensieren.

## Revendications

1. Un système de vision (10) pour un véhicule à moteur, comprenant un appareil d'imagerie stéréo (11) adapté pour capturer des images d'un environnement du véhicule à moteur, un bloc de calcul de disparité (17) adapté pour calculer une disparité stéréo d'images gauche/droite capturées par ledit appareil d'imagerie (11), un moyen de mémoire (25), et un dispositif de traitement (14) adapté pour réaliser un traitement d'image d'images capturées par ledit appareil d'imagerie stéréo (11), dans lequel ledit système de vision est adapté pour réaliser un partage de temps dudit bloc de calcul de disparité (17) par permutation périodique entre ledit calcul de disparité stéréo et le calcul d'un flux optique unidimensionnel dans une direction verticale d'images capturées, dans lequel des images du cadre temporel actuel et du dernier cadre temporel avant l'actuel, ou de cadres actuels et de derniers cadres avant les actuels de même niveau d'exposition, d'un dispositif d'imagerie (12) choisi parmi la pluralité de dispositifs d'imagerie optique (12a, 12b) formant l'appareil d'imagerie stéréo (11), sont stockées dans ledit moyen de mémoire (25) pour ledit calcul de flux optique vertical, dans lequel ledit système de vision (10) est adapté pour réaliser une transposition d'image impliquant une rotation de 90°, afin de changer une recherche par colonne en une recherche par rangée, avant de réaliser ledit calcul de flux optique vertical avec une recherche unidimensionnelle suivant l'ensemble de rangées d'images transposées,
dans lequel ledit système de vision (10) est adapté pour réaliser un calcul de disparité stéréo dans ledit bloc de calcul de disparité (17), réacheminer des données d'image dudit bloc de calcul de disparité (17) audit dispositif de traitement (14), et renvoyer par diffusion en continu à des données d'image dudit dispositif de traitement (14) au bloc de calcul de disparité (17) pour le calcul de flux optique, dans lequel ledit bloc de calcul de disparité (17) est réalisé dans un dispositif matériel dédié (13),
dans lequel une supposition initiale du flux optique vertical est utilisée dans le calcul de flux optique vertical, dans lequel ladite supposition initiale du flux optique vertical est basée sur un égo-mouvement du véhicule, une hypothèse de route plate et/ou des informations de profondeur du traitement d'image stéréo, dans lequel ladite supposition initiale du flux optique vertical est utilisée pour compenser une image précédente dans le calcul de flux optique vertical.

2. Le système de vision selon la revendication 1, **caractérisé en ce que** ledit bloc de calcul de disparité (17) est adapté pour calculer un flux optique unidimensionnel dans une direction horizontale d'images capturées.

3. Le système de vision selon la revendication 2, **caractérisé en ce que** le flux optique horizontal unidimensionnel et le flux optique vertical unidimensionnel sont combinés pour former une approximation de flux optique bidimensionnel.

4. Le système de vision selon l'une quelconque des revendications précédentes, **caractérisé en ce qu'**un flux optique horizontal estimé avec un moteur de recherche de corrélation unidimensionnelle dans ledit bloc de calcul de disparité (17) est utilisé dans le calcul de flux optique vertical.

5. Le système de vision selon la revendication 4, **caractérisé en ce que** le flux optique horizontal estimé est utilisé pour compenser une image précédente dans le calcul de flux optique vertical.

6. Le système de vision selon l'une quelconque des revendications 2 à 5, dans lequel des images au moins du cadre temporel actuel et du dernier cadre temporel avant l'actuel sont stockées dans ledit moyen de mémoire (25) pour ledit calcul de flux optique horizontal.

7. Le système de vision selon la revendication 6, dans lequel les images stockées dans ledit moyen de mémoire (25) pour ledit calcul de flux optique horizontal et/ou ledit calcul de flux optique vertical sont des images pré-traitées de taille réduite en comparaison aux images brutes prises par l'appareil d'imagerie (11).

8. Le système de vision selon l'une quelconque des revendications précédentes, dans lequel ledit système de vision (10) est adapté pour estimer un déplacement vertical d'images capturées, et pour décaler une image verticalement avant le calcul de flux optique horizontal afin de compenser un changement de pas du véhicule, et/ou pour réaliser un traitement de compensation sur des images capturées afin de compenser un déplacement du véhicule.

9. Le système de vision selon l'une quelconque des revendications précédentes, dans lequel ledit dispositif matériel dédié est un réseau de portes programmables FPGA, un circuit intégré à application spécifique ASIC ou une partie d'un dispositif de pucesystème SoC.

10. Un procédé de vision pour un véhicule à moteur, comprenant la capture d'images d'un environnement du véhicule à moteur, le calcul dans un bloc de calcul de disparité (17) d'une disparité stéréo d'images gauche/droite capturées par ledit appareil d'imagerie stéréo (11), et la réalisation d'un traitement d'image des images capturées par un dispositif de traitement d'image (14), la réalisation d'un partage de temps dudit bloc de calcul de disparité (17) par permutation périodique entre ledit calcul de disparité stéréo et un calcul de flux optique d'un flux optique unidimensionnel dans une direction verticale d'images capturées, et le stockage d'images du cadre temporel actuel et du dernier cadre temporel avant l'actuel, ou de cadres actuels et de derniers cadres avant les actuels de même niveau d'exposition, d'un dispositif d'imagerie (12) choisi parmi la pluralité de dispositifs d'imagerie optique (12a, 12b) formant l'appareil d'imagerie stéréo (11),
pour ledit calcul de flux optique, la réalisation d'une transposition d'image impliquant une rotation de 90°, afin de changer une recherche par colonne en une recherche par rangée, avant de réaliser ledit calcul de flux optique vertical avec une recherche unidimensionnelle suivant l'ensemble de rangées d'images transposées, dans lequel ledit procédé de vision comprend la réalisation d'un calcul de disparité stéréo dans ledit bloc de calcul de disparité (17), le réacheminement des données d'image dudit bloc de calcul de disparité (17) audit dispositif de traitement (14), et renvoi par diffusion en continu de données d'image dudit dispositif de traitement (14) au bloc de calcul de disparité (17) pour le calcul de flux optique, dans lequel ledit bloc de calcul de disparité (17) est réalisé dans un dispositif matériel dédié (13), dans lequel une supposition initiale du flux optique vertical est utilisée dans le calcul de flux optique vertical, dans lequel ladite supposition initiale du flux optique vertical est basée sur un égo-mouvement du véhicule, une hypothèse de route plate et/ou des informations de profondeur du traitement d'image stéréo, dans lequel ladite supposition initiale du flux optique vertical est utilisée pour compenser une image précédente dans le calcul de flux optique vertical.
